(19) Europäisches Patentamt
European Patent Office
Office européen des brevets

(11) **EP 3 403 894 B1**

(12) **EUROPÄISCHE PATENTSCHRIFT**

(45) Veröffentlichungstag und Bekanntmachung des Hinweises auf die Patenterteilung:
**20.05.2020  Patentblatt 2020/21**

(51) Int Cl.:
*B60G 1/00* (2006.01)      *B60T 8/17* (2006.01)
*B60G 17/018* (2006.01)      *B60K 23/08* (2006.01)

(21) Anmeldenummer: **18168916.7**

(22) Anmeldetag: **24.04.2018**

(54) **VERFAHREN ZUR ERMITTLUNG EINER AUFSTANDSKRAFT AN EINEM NUTZFAHRZEUG**

METHOD FOR DETERMINING A VERTICAL LOAD ON A UTILITY VEHICLE

PROCÉDÉ DE DÉTERMINATION D'UNE FORCE DE SOULÈVEMENT SUR UN VÉHICULE UTILITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2017  DE 102017207248**

(43) Veröffentlichungstag der Anmeldung:
**21.11.2018  Patentblatt 2018/47**

(73) Patentinhaber: **Deere & Company**
**Moline, IL 61265 (US)**

(72) Erfinder:
• **Thomas, Woopen**
**68163 Mannheim (DE)**
• **Fritz, Norbert**
**68163 Mannheim (DE)**
• **Gugel, Rainer**
**68163 Mannheim (DE)**
• **Schott, Florian**
**68163 Mannheim (DE)**
• **Reinmuth, Florian**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
DE-A1- 10 307 510      DE-A1-102007 062 203
DE-A1-102015 115 852      DE-A1-102015 212 351
GB-A- 2 499 252      US-A1- 2003 154 012
US-A1- 2016 082 973

EP 3 403 894 B1

**EP 3 403 894 B1**

**Beschreibung**

Die Erfindung betrifft ein Verfahren zur Ermittlung einer Aufstandskraft an einem Nutzfahrzeug.

Zur Ermittlung von Aufstandskräften an Rädern oder Radachsen ist es bekannt, Kraftsensoren an Antriebsachsen zu verwenden. Im Falle einer hydraulisch gefederten Radachse kann eine Aufstandskraft an dieser Radachse über den Druck in den Hydraulikzylindern der Federung ermittelt werden. Bei anderen Radachsen ist eine derartige Ermittlung von Aufstandskräften nicht möglich.

Es ist daher Aufgabe der vorliegenden Erfindung, Aufstandskräfte an einer Radachse auf einfache Weise zu ermitteln.

Diese Aufgabe wird gemäß den Merkmalen des Patentanspruchs 1 gelöst. Gemäß Patentanspruch 1 weist das Nutzfahrzeug mindestens eine erste Radachse und eine weitere Radachse auf, wobei eine Aufstandskraft an der weiteren Radachse ermittelt wird. Dabei wird die Aufstandskraft in Abhängigkeit von mindestens folgenden Merkmalen ermittelt:

- einem der weiteren Radachse zugeordneten oder an dieser Radachse ermittelten Antriebsschlupf, und
- einer fahrgrundspezifischen Ermittlungs-Information (z.B. einer Kennlinie, welche einen spezifischen Fahrgrund repräsentiert), welche einen Antriebsschlupf in Abhängigkeit eines Traktionskoeffizienten wiedergibt.

Die fahrgrundspezifische Ermittlungs-Information berücksichtigt, dass abhängig von dem spezifischen Fahrgrund (wie z.B. Asphalt, lehmiger Sand, Schlamm), also der Beschaffenheit des Fahrgrunds für das Nutzfahrzeug, eine spezifische Abhängigkeit zwischen einem Traktionskoeffizienten und einem Antriebsschlupf besteht.

Außerdem wird von der Überlegung ausgegangen, dass ein Antriebsschlupf an der weiteren Radachse (z.B. für jedes Rad dieser Radachse) und eine Antriebskraft an dieser Radachse (z.B. für jedes Rad dieser Radachse) ohne wesentlichen zusätzlichen technischen Aufwand ermittelt werden können. Insbesondere werden diese physikalischen Größen für die Steuerung anderer Funktionen am Nutzfahrzeug ohnehin routinemäßig ermittelt und können beispielsweise an einem elektronischen Fahrzeug-Bus (z.B. CAN) abgefragt werden.

So kann der Antriebsschlupf an einem Rad der weiteren Radachse insbesondere dadurch berechnet werden, dass auf verschiedene physikalische Größen des Nutzfahrzeugs zurückgegriffen wird, welche am Nutzfahrzeug als Daten zur Verfügung stehen. Diese physikalischen Größen sind beispielsweise die Fahrgeschwindigkeit des Nutzfahrzeugs (ermittelt z.B. über GPS, Radar), ein Lenkzustand, bekannte Hauptgeometrien des Nutzfahrzeugs, Raddrehzahlen und Reifenabrollradien. Unter Berücksichtigung einzelner oder sämtlicher dieser Größen kann für jedes Rad der weiteren Radachse der Antriebsschlupf ermittelt werden. Genauer gesagt ergibt sich der Antriebsschlupf an dem betreffenden Rad aus der (betraglichen) Differenz zwischen der Umfangsgeschwindigkeit des Rads und der Fortbewegungsgeschwindigkeit des Nutzfahrzeugs gegenüber dem Erdboden, normiert auf die Umfangsgeschwindigkeit des Rads. Die Fortbewegungsgeschwindigkeit des Nutzfahrzeugs gegenüber dem Erdboden lässt sich hierbei aus der ermittelten Fahrgeschwindigkeit des Nutzfahrzeugs ableiten, wohingegen in die Umfangsgeschwindigkeit des Rads neben der betreffenden Raddrehzahl der Reifenabrollradius eingeht.

Wird dieser ermittelte Antriebsschlupf dann mit der vorgenannten fahrgrundspezifischen Ermittlungs-Information in Beziehung gesetzt, kann ein entsprechender Wert eines Traktionskoeffizienten ermittelt werden.

Die Antriebskraft der weiteren Radachse oder eines einzelnen Rades dieser Radachse ist vorteilhaft technisch einfach herleitbar, indem von der bekannten Gesamt-Antriebskraft, welche vom Antriebsstrang des Nutzfahrzeugs übertragen wird, die bereits ermittelte Antriebskraft an der ersten Radachse oder an mehreren Radachsen außerhalb der vorgenannten weiteren Radachse abgezogen wird.

Gemäß der allgemeinen physikalischen Formel

$$\kappa \;=\; F\_ant/F\_auf$$

kann dann die Aufstandskraft F_auf an der weiteren Radachse ermittelt werden, wobei

- $\kappa$ der Traktionskoeffizient ist,
- F_ant die in Fahrtrichtung ausgerichtete Antriebskraft (z.B. eines einzelnen Rades oder an der Radachse) ist, und
- F_auf die in Richtung einer Hochachse des Nutzfahrzeugs ausgerichtete Aufstandskraft (z.B. eines einzelnen Rades oder an der Radachse) ist.

Mit der beschriebenen Vorgehensweise können Aufstandskräfte ohne zusätzliche Bauteile (z.B. Sensorik) oder montagetechnischen Aufwand am Nutzfahrzeug an beliebigen Radachsen ermittelt werden. Entsprechend technisch einfach kann die Gesamtlast, d.h. die Summe aller Aufstandskräfte, des Nutzfahrzeugs abgeschätzt werden. Da die Aufstandskraft in Abhängigkeit der physikalischen Größen Antriebsschlupf und Traktionskoeffizient ermittelt wird, kann die Ermittlung bei unterschiedlichen Fahrbedingungen erfolgen. Auch kann ein Quervergleich der bei unterschiedlichen Fahrbedingungen ermittelten Aufstandskraft dazu beitragen, die Genauigkeit der tatsächlichen Aufstandskraft zu verbessern.

Insbesondere lässt sich die beschriebene Ermittlung der Aufstandskraft auf ungefederte Radachsen anwenden, welche ungefedert mit einer Tragstruktur des Nutzfahrzeugs direkt verbunden sind. Dies ist z.B. bei der Hinterachse eines Nutzfahrzeugs, insbesondere eines Traktors oder eines anderen landwirtschaftlichen Fahrzeugs, der Fall, während die Vorderachse gefedert ist, so dass deren Aufstandskraft (d.h. der Anteil des Fahrzeuggewichts, das an dieser Achse lastet) beispielsweise über den Druck in den Hydraulikzylindern der Federung ermittelbar ist.

Bei dem Nutzfahrzeug handelt es sich in einer bevorzugten Ausführungsform um einen Traktor, dessen erste Radachse eine Vorderachse und dessen weitere Radachse eine Hinterachse ist. Insbesondere weist das Nutzfahrzeug einen Allradantrieb auf.

Erfindungsgemäß wird die fahrgrundspezifische Ermittlungs-Information zur Ermittlung eines Traktionskoeffizienten an der weiteren Radachse zur Verfügung gestellt, indem sie von einer fahrgrundspezifischen Basis-Information abgeleitet wird, welche der ersten Radachse des Nutzfahrzeugs zugeordnet ist. Vorzugsweise gibt diese Basis-Information einen spezifischen Fahrgrund des Nutzfahrzeugs (z.B. Asphalt, lehmiger Sand, Schlamm) wieder. Diese Wiedergabe erfolgt z.B. in Form einer Kennlinie, welche einen Traktionskoeffizienten in Abhängigkeit eines Antriebsschlupfs darstellt.

Abhängig von physikalischen Randbedingungen kann die Ableitung der fahrgrundspezifischen Ermittlungs-Information von der Basis-Information bedeuten, dass erstere entweder identisch mit der Basis-Information ist oder sich von der Basis-Information unterscheidet.

Beispielsweise erfolgt die Ableitung der Ermittlungs-Information von der Basis-Information in Abhängigkeit mindestens einer der folgenden Größen:

- einer Fahrzeuggeschwindigkeit des Nutzfahrzeugs,
- einem Lenkzustand des Nutzfahrzeugs,
- einer Fahrspur der ersten Radachse,
- einer Fahrspur der weiteren Radachse,
- einem Abrollradius mindestens eines Rades der ersten Radachse,
- einem Abrollradius mindestens eines Rades der weiteren Radachse.

Die aktuellen Werte dieser Größen stehen vorzugsweise ohne zusätzlichen technischen Aufwand zur Verfügung, da sie in vielen Fällen standardmäßig für andere Steuerungszwecke am Nutzfahrzeug ermittelt und an einem elektronischen Bus (z.B. CAN) des Nutzfahrzeugs abgefragt werden können.

Die Ermittlungs-Information wird vorzugsweise nach folgenden Kriterien abgeleitet:
In einer ersten Fallgruppe wird angenommen, dass an der weiteren Radachse ein spezifischer Fahrgrund bzw. eine Fahrgrundbeschaffenheit vorliegt, der bzw. die mit dem spezifischen Fahrgrund an der ersten Radachse vergleichbar ist. In solchen Fällen kann die Basis-Information identisch als Ermittlungs-Information verwendet werden. Dies ist beispielsweise bei Fahrten über harten Fahrgrund (z.B. Asphalt, harter Lehmboden) möglich oder auch bei Kurvenfahrten, wenn die weitere Radachse (z.B. Hinterachse) nicht der vorverdichteten Fahrspur der ersten Radachse (z.B. Vorderachse) folgt.

In einer weiteren Fallgruppe wird angenommen, dass die Fahrgrundbeschaffenheit an der ersten Radachse im Vergleich zu der Fahrgrundbeschaffenheit an der weiteren Radachse unterschiedlich ist. In solchen Fällen wird die Ermittlungs-Information mit einer Korrektur von der Basis-Information abgeleitet. Beispielsweise folgt die weitere Radachse (z.B. Hinterachse) exakt der Fahrspur der ersten Radachse (z.B. Vorderachse), so dass auf nachgiebigen Ackerböden für die weitere Radachse ein bereits vorverdichteter und somit griffigerer Fahrgrund vorliegt. In einem solchen Fall wird die fahrgrundspezifische Ermittlungs-Information bereitgestellt, indem die fahrgrundspezifische Basis-Information in Richtung eines kompakteren Fahrgrunds korrigiert wird.

In einer bevorzugten Ausführungsform wird eine fahrgrundspezifische Basis-Information (z.B. eine Kennlinie) bestimmt, indem mehrere unterschiedliche fahrgrundspezifische Informationen (z.B. ein Kennlinien-Feld mit unterschiedlichen Kennlinien) bereitgestellt werden, welche jeweils einen Traktionskoeffizienten in Abhängigkeit eines Antriebsschlupfs wiedergeben. Weiterhin werden an der ersten Radachse (z.B. für die gesamte Radachse, für ein Rad oder jeweils für beide Räder) ein Wert des Traktionskoeffizienten (vorzugsweise mittels einer Antriebskraft und einer Aufstandskraft an der ersten Radachse) und ein Wert des Antriebsschlupfs ermittelt. Aus diesen Werten kann die zutreffende Basis-Information unter den bereitgestellten unterschiedlichen fahrgrundspezifischen Informationen bestimmt werden.

Hierbei besteht die Möglichkeit, die ermittelte Aufstandskraft dazu zu verwenden, eine Bremseinrichtung des Nutzfahrzeugs, insbesondere an dessen erster Radachse, anzusteuern und/oder eine Allradkupplung des Nutzfahrzeugs anzusteuern. Diese Bremseinrichtung und/oder diese Allradkupplung werden folglich in Abhängigkeit der ermittelten Aufstandskraft angesteuert.

In einer alternativen, nicht erfindungsgemäßen Ausführung wird die vorgenannte Ansteuerung einer Bremseinrichtung und/oder Allradkupplung in Abhängigkeit der ermittelten Aufstandskraft unabhängig von einer Kombination mit einem oder mehreren Merkmalen des Patentanspruches 1 oder davon abhängiger Unteransprüche durchgeführt. Mit anderen Worten wird in diesem Fall eine ermittelte Aufstandskraft als Eingangsgröße für die Ansteuerung verwendet unabhängig davon, auf welche Weise die Aufstandskraft an einer Radachse ermittelt worden ist. Beispielsweise kann für die Ermittlung der Aufstandskraft eine entsprechende Sensorik an dem Nutzfahrzeug verwendet werden.

Beispielsweise kann die ermittelte Aufstandskraft als Eingangsgröße für eine ABS (Antiblockiersystem)-Steuerung verwendet werden, welche eine Bremseinrichtung in Abhängigkeit der ermittelten Aufstandskraft ansteuert.

In einer bevorzugten Ausführungsform wird die ein Drehmoment von einer Radachse zu einer anderen Radachse übertragende Allradkupplung derart angesteuert, dass das übertragene Übertragungs-Drehmoment höchstens so groß ist wie ein definiertes maximales Drehmoment, wobei dieses maximale Drehmoment in Abhängigkeit eines maximalen Bremsmomentes bestimmt wird. Hierdurch kann das maximale Übertragungs-Drehmoment derart dimensioniert werden, dass bei einem Bremsvorgang an einer Radachse deren Räder gerade noch nicht blockieren, somit also eine maximale Abbremsung an dieser Radachse erreicht wird. Dabei liegt die Überlegung zugrunde, dass bei einem Nutzfahrzeug, insbesondere einem Traktor, bei einem Bremsvorgang der Allradantrieb aktiviert wird. Hierbei wird der Allradantrieb vorzugsweise über eine Allradkupplung vollständig hinzugeschaltet. Infolge der Aktivierung des Allradantriebs kann die Bremskraft der Hinterrad-Bremsen über den Antriebsstrang des Nutzfahrzeugs auch auf die Vorderräder wirken. Dies führt zu einer verstärkten Abbremsung der Vorderräder. Hierbei kann ein etwaiges Blockieren der Vorderräder vermieden werden, indem das vorgenannte maximale Bremsmoment und maximale Übertragungs-Drehmoment definiert werden. Durch eine Steuerung des Drehmoments der Allradkupplung ist diese derart einzustellen, dass ihre Drehmomenten-Kapazität das maximale Übertragungs-Drehmoment nicht übersteigt. Hierdurch wird erreicht, dass die hauptsächlich in den Bremsvorgang involvierte Vorderachse des Nutzfahrzeugs in ihrem optimalen Traktionsbereich bzw. Kraftschlussbereich betrieben wird, Folglich kann ein etwaiges Blockieren der Vorderachse zulasten der nicht stark belasteten Hinterachse vermieden werden.

Bei entsprechend ausgelegten Allradantrieben ist es auch möglich, die vorbeschriebene Wirkung in Bezug auf die Hinterachse anstelle der Vorderachse zu erreichen, indem gezielt Bremskraft von der Hinterachse des Nutzfahrzeugs auf die Vorderachse übertragen wird derart, dass die Hinterachse zulasten der Vorderachse in einen optimalen Traktionsbereich kommt und hierdurch mit maximaler Bremskraft verzögert, ohne blockiert zu werden. Dabei wird die Entscheidung, ob die Vorderachse oder die Hinterachse hinsichtlich des Bremsvorgangs optimiert werden soll, vorzugsweise davon abhängig gemacht, ob das Nutzfahrzeug tendenziell ein übersteuerndes oder untersteuerndes Verhalten aufweist. So kann beispielsweise bei Kurvenfahrt im Falle eines tendenziell übersteuernd ausgelegten Nutzfahrzeugs eher eine blockierende Vorderachse und dafür eine optimiert geregelte Hinterachse angestrebt werden, während im Falle eines tendenziell untersteuernd ausgelegten Nutzfahrzeugs eine blockierende Hinterachse bei optimiert geregelter Vorderachse von Vorteil ist.

Das vorgenannte maximale Bremsmoment wird vorzugsweise technisch einfach unter Berücksichtigung eines maximalen Traktionskoeffizienten bestimmt, wobei dieser maximale Traktionskoeffizient wiederum abhängig von der an einer Radachse ermittelten Aufstandskraft und ggf. den Aufstandskräften der anderen Radachsen bestimmt werden kann.

In einer bevorzugten Ausführungsform wird der maximale Traktionskoeffizient als ein Maximalwert einer fahrgrundspezifischen Information entnommen, welche einen spezifischen Fahrgrund (z.B. Asphalt, lehmiger Sand, Schlamm) für das Nutzfahrzeug repräsentiert. Dabei gibt die fahrgrundspezifische Information - beispielsweise als Kennlinie - einen Traktionskoeffizienten in Abhängigkeit eines Antriebsschlupfs wieder. Ein Maximalwert des Traktionskoeffizienten ist hierdurch einfach ermittelbar.

Die fahrgrundspezifische Information wiederum wird vorzugsweise bestimmt, indem mehrere unterschiedliche fahrgrundspezifische Informationen (insbesondere ein Kennlinien-Feld mit unterschiedlichen Kennlinien) bereitgestellt werden und die zutreffende fahrgrundspezifische Information in Abhängigkeit eines für das Nutzfahrzeug ermittelten Fahrzeug-Traktionswertes und eines für das Nutzfahrzeug ermittelten Fahrzeug-Antriebsschlupfwertes bestimmt wird. Die Kombination beider Werte ermöglicht mit geringem Rechenaufwand eine Identifizierung der zutreffenden oder am ehesten zutreffenden fahrgrundspezifischen Information.

Der vorgenannte Fahrzeug-Traktionswert wird vorzugsweise in Abhängigkeit der ermittelten Aufstandskraft ermittelt. Dabei entspricht der Fahrzeug-Traktionswert dem Verhältnis aus der vom Antriebsstrang des Nutzfahrzeugs übertragenen Gesamt-Antriebskraft und der Summe der am Nutzfahrzeug vorhandenen Aufstandskräfte. Über die vorgenannten mathematisch-physikalischen Beziehungen entsteht in bevorzugten Ausführungsformen eine mit geringem technischen Aufwand realisierbare Ansteuerung einer Bremseinrichtung und/oder einer Allradkupplung des Nutzfahrzeugs in Abhängigkeit einer ermittelten Aufstandskraft.

Die einzelnen Aufstandskräfte (z.B. an einer Radachse oder an einzelnen Rädern) können auf unterschiedliche Weise ermittelt werden. Insbesondere wird eine einzelne Aufstandskraft gemäß dem Verfahren nach Patentanspruch 1 oder einem davon abhängigen Unteranspruch ermittelt.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1 eine schematische perspektivische Ansicht eines Nutzfahrzeugs,

Fig. 2 ein Kennlinienfeld mit Darstellung eines Traktionskoeffizienten in Abhängigkeit eines Antriebsschlupfs für unterschiedlichen Fahrgrund,

Fig. 3 Kennlinienfelder zur Bestimmung des Fahrgrunds an einer Radachse und Abschätzung des Traktionskoeffizienten an einer anderen Radachse in einer ersten Ausführungsform,

Fig. 4 Kennlinienfelder zur Bestimmung des Fahrgrunds an einer Radachse und Abschätzung des Traktionskoeffizienten an einer anderen Radachse in einer weiteren Ausführungsform,

Fig. 5 ein Blockschaltbild mit einer verfahrensgemäß ermittelten Aufstandskraft als Ausgangsgröße,

Fig. 6 ein Blockschaltbild mit einem verfahrensgemäß ermittelten maximalen Übertragungs-Moment als Ausgangsgröße zur Ansteuerung einer Allradkupplung eines Nutzfahrzeugs.

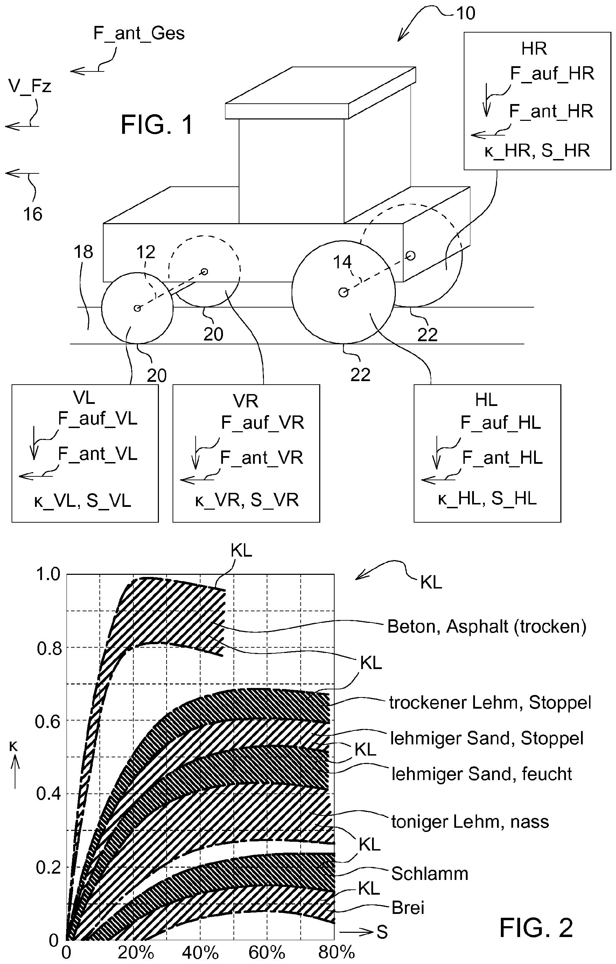

Fig. 1 zeigt schematisch ein Nutzfahrzeug 10, welches insbesondere als ein Traktor, Schlepper der dergleichen ausgebildet ist. Das Nutzfahrzeug 10 weist als eine erste Radachse eine Vorderachse 12 und als eine weitere Radachse eine Hinterachse 14 auf. Einem rechten Vorderrad VR der Vorderachse 12 ist eine Antriebskraft F_ant_VR und einem linken Vorderrad VL eine Antriebskraft F_ant_VL zugeordnet. Einem rechten Hinterrad HR der Hinterachse 14 ist eine Antriebskraft F_ant_HR und einem linken Hinterrad HL eine Antriebskraft F_ant_HL zugeordnet. An den Vorderrädern wirken die Aufstandskräfte F_auf_VR und F_auf_VL, während an den Hinterrädern die Aufstandskräfte F_auf_HR und F_auf_HL wirken. Das Nutzfahrzeug 10 fährt entlang einer Fahrtrichtung 16 mit einer Fahrgeschwindigkeit v_Fz. Hierbei wird vom Antriebsstrang des Nutzfahrzeugs eine Gesamt-Antriebskraft F_ant_ges übertragen, welche sich auf die bereits genannten Antriebskräfte F_ant_VR, F_ant_VL, F_ant_HR und F_ant_HL aufteilt. Den beiden Vorderrädern VR, VL ist ein Traktionskoeffizient $\kappa$_VR bzw. $\kappa$_VL und ein Antriebsschlupf s_VR bzw. s_VL zugeordnet, während den beiden Hinterrädern ein Traktionskoeffizient $\kappa$_HR bzw. $\kappa$_HL und ein Antriebsschlupf s_HR bzw. s_HL zugeordnet ist.

Das Nutzfahrzeug 10 fährt auf einem Fahrgrund 18, der unterschiedliche Bodenbeschaffenheiten (z.B. Asphalt, lehmiger Sand, Schlamm) haben kann. Die Bodenbeschaffenheit der Fahrspur 20 der Vorderachse 12 einerseits und die Bodenbeschaffenheit der Fahrspur 22 der Hinterachse 14 andererseits können identisch sein (z.B. bei trockenem und festem Fahrgrund 18 oder bei unterschiedlichen Fahrspuren 20, 22) oder unterschiedlich sein (z.B. bei nassem Fahrgrund und identischen Fahrspuren 20, 22).

In dem Ausführungsbeispiel sei die Vorderachse 12 mit einer Tragstruktur 24 des Nutzfahrzeugs 10 über eine Federung (z.B. Hydraulikzylinder) verbunden, während die Hinterachse 14 mit der Tragstruktur ungefedert verbunden ist. Eine Aufstandskraft der gefederten Vorderachse 12 lässt sich deshalb beispielsweise als Summe einer dort sensorisch ermittelten Federkraft und der Gewichtskraft der ungefederten Achsmassen bezüglich der Vorderachse 12 berechnen. Für die ungefederte Hinterachse 14 ist eine derartige Ermittlung von Aufstandskräften nicht möglich.

Verfahrensgemäß wird eine Aufstandskraft an der Hinterachse 14 - entweder nur für ein einzelnes Rad HR oder HL, oder für beide Räder oder für die gesamte Radachse - ermittelt, indem zunächst von der allgemeinen physikalischen Gleichung

$$\kappa \ = \ F\_ant \ / \ F\_auf \qquad\qquad (1),$$

ausgegangen wird, wobei

- $\kappa$ ein Traktionskoeffizient (z.B. eines einzelnen Rades $\kappa$_HR bzw. $\kappa$_HL an der Hinterachse 14) ist,
- F_ant die üblicherweise in Fahrtrichtung 16 ausgerichtete Antriebskraft (z.B. eines einzelnen Rades F_ant_HR bzw. F_ant_HL, oder an der gesamten Hinterachse 14) ist, und
- F_auf die Aufstandskraft (z.B. eines einzelnen Rades F_auf_HR bzw. F_auf_HL, oder an der gesamten Hinterachse 14) ist.

Nachfolgende mathematisch-physikalische Überlegungen werden teilweise allgemein erläutert und können entsprechend jeweils auf die beiden Hinterräder HR und HL der Hinterachse 14 angewendet werden, so dass für jedes Hinterrad die Aufstandskraft F_auf_HR bzw. F_auf_HL ermittelt werden kann.

Allgemein ergibt sich die Aufstandskraft F_auf gemäß Gleichung (1) als

$$F\_auf = F\_ant / \kappa \qquad\qquad (2).$$

Die Antriebskraft F_ant der Hinterachse 14 ist bekannt, indem von der Gesamt-Antriebskraft F_ant_ges gemäß Antriebsstrang die Antriebskräfte F_ant_VR und F_ant_VL der beiden Vorderräder VR und VL abgezogen werden. Dabei können die beiden Antriebskräfte F_ant_VR und F_ant_VL als bekannt vorausgesetzt werden, da sie in üblicher Weise abgeschätzt werden, beispielsweise auf Grundlage einer Drehmomentmessung an der Vorderachse oder eines Messverfahrens, wie es beispielsweise aus der DE 10 2015 212 897 A1 bekannt ist.

Somit können die beiden Antriebskräfte F_ant_HR und F_ant_HL als jeweils die Hälfte der Antriebskraft F_ant an der Hinterachse 14 angesetzt werden.

Folglich muss nur noch der Traktionskoeffizient $\kappa$ gemäß Gleichung (2) ermittelt werden. Dies erfolgt verfahrensgemäß, indem der der Hinterachse 14 zugeordnete Antriebsschlupf s_HR bzw. s_HL und eine fahrgrundspezifische Ermittlungs-Information herangezogen werden. Dabei wird der Antriebsschlupf s_HR bzw. s_HL je Hinterrad in üblicher Weise berechnet, insbesondere über die Fahrgeschwindigkeit v_Fz des Nutzfahrzeugs 10, die Raddrehzahlen n_HR bzw. n_HL und den Reifenabrollradien r_HR bzw. r_HL an den Hinterrädern HR und HL, s_HR/HL = (2π • r_HR/HL • n_HR/HL - v_Fz) / (2n • r_HR/HL • n_HR/HL).

Die fahrgrundspezifische Ermittlungs-Information gibt einen Traktionskoeffizienten $\kappa$ in Abhängigkeit eines Antriebsschlupfs s wieder. Ausgehend von dem - wie vorstehend beschrieben - bekannten Antriebsschlupf s_HR bzw. s_HL an einem Hinterrad der Hinterachse 14 kann deshalb über die Ermittlungs-Information der gesuchte jeweilige Traktionskoeffizient $\kappa$_HR bzw. $\kappa$_HL bestimmt werden, was durch Ablesen aus einem nachfolgend erläuterten Kennlinien-Feld erfolgt. Aus dem bestimmten Traktionskoeffizienten $\kappa$_HR bzw. $\kappa$_HL kann dann die jeweilige Aufstandskraft F_auf_HR bzw. F_auf_HL an der Hinterachse 14 ermittelt werden.

Die fahrgrundspezifische Ermittlungs-Information selbst ist durch eine noch zu beschreibende Kennlinie repräsentiert und wird zur Verfügung gestellt, indem sie von einer fahrgrundspezifischen Basis-Information abgeleitet wird. Diese Basis-Information ist ebenfalls eine noch zu beschreibende Kennlinie, welche einen Traktionskoeffizienten $\kappa$ in Abhängigkeit eines Antriebsschlupfs s wiedergibt. Die Basis-Information ist der Vorderachse 12, d.h. der Radachse oder einem einzelnen Rad VR bzw. VL, zugeordnet. Sie wird aus mehreren bereitgestellten unterschiedlichen fahrgrundspezifischen Informationen ausgewählt bzw. bestimmt.

Gemäß Fig. 2 werden diese unterschiedlichen fahrgrundspezifischen Informationen als ein Kennlinien-Feld bereitgestellt. Unterschiedliche Kennlinien KL geben einen Traktionskoeffizienten $\kappa$ in Abhängigkeit eines Antriebsschlupfs s wieder. Dem Diagramm gemäß Fig. 2 ist entnehmbar, dass einzelne Kennlinien KL oder Kennlinien-Bereiche abhängig vom Fahrgrund 18, also fahrgrundspezifisch unterschiedlich sind. Beispielsweise sind die Kennlinien-Bereiche "Beton, Asphalt (trocken)", "trockener Lehm" und "Schlamm" dargestellt. Innerhalb jedes Kennlinien-Bereiches können wiederum fahrgrundspezifisch unterschiedliche Kennlinien KL enthalten sein.

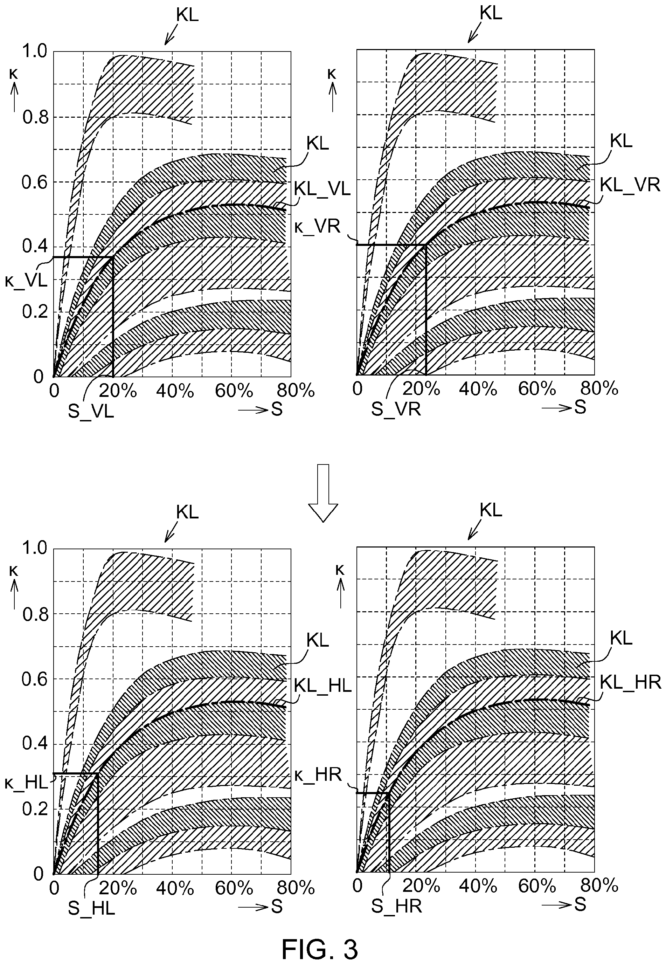

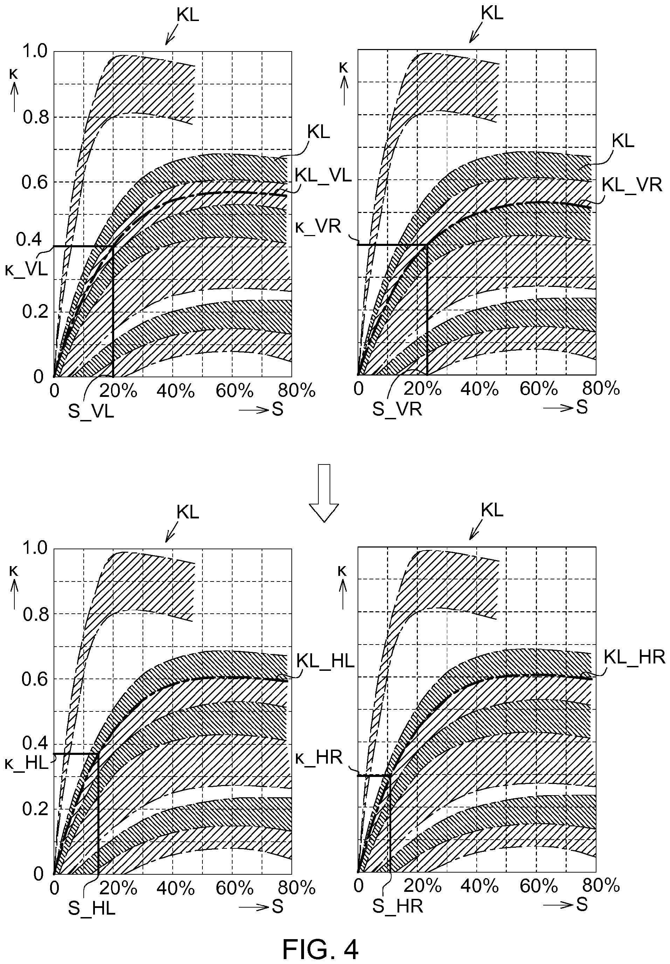

Beispielhafte Bestimmungen der fahrgrundspezifischen Basis-Kennlinie als Basis-Information und der fahrgrundspezifischen Ermittlungs-Kennlinie als Ermittlungs-Information wird nachfolgend anhand von Fig. 3 und Fig. 4 erläutert.

Für die beiden Vorderräder VR und VL stehen die Werte des Traktionskoeffizienten $\kappa$_VR bzw. $\kappa$_VL über die bekannten Aufstands- und Antriebskräfte an der Vorderachse 12 zur Verfügung. Ebenso stehen für die beiden Vorderräder VR und VL die Werte des Antriebsschlupfs s_VR bzw. s_VL zur Verfügung, indem diese in üblicher Weise - vorzugsweise analog zu der Berechnung des bereits erläuterten Antriebsschlupfs s_HR bzw. s_HL an der Hinterachse 14 - berechnet werden.

In Abhängigkeit dieser Werte für die beiden Vorderräder VR und VL wird die in Fig. 3 und Fig. 4 fett markierte Basis-Kennlinie KL_VR bzw. KL_VL bestimmt, welche der Vorderachse 12 zugeordnet ist.

Im Fall gemäß Fig. 3 wird anhand geeigneter physikalischer Größen (z.B. Fahrzeuggeschwindigkeit v, Lenkzustand des Nutzfahrzeugs 10, Fahrspur 20 der Vorderachse 12, Fahrspur 22 der Hinterachse 14, Abrollradien der Räder VR, VL der Vorderachse, 12, Abrollradien der Räder HR, HL der Hinterachse 14) festgestellt, dass die Hinterräder HR, HL eine andere Fahrspur benutzen als die Vorderräder VR, VL. In diesem Fall ist die der Hinterachse 14 zugeordnete Ermittlungs-Kennlinie identisch mit der Basis-Kennlinie, d.h. die dem rechten Hinterrad HR zugeordnete, fett markierte Ermittlungs-Kennlinie KL_HR ist identisch mit der Basis-Kennlinie KL_VR und die dem linken Hinterrad HL zugeordnete, fett markierte Ermittlungs-Kennlinie KL_HL ist identisch mit der Basis-Kennlinie KL_VL.

Im Fall gemäß Fig. 4 wird anhand geeigneter physikalischer Größen (z.B. Fahrzeuggeschwindigkeit v, Lenkzustand des Nutzfahrzeugs 10, Fahrspur 20 der Vorderachse 12, Fahrspur 22 der Hinterachse 14, Abrollradien der Räder VR, VL der Vorderachse, 12, Abrollradien der Räder HR, HL der Hinterachse 14) festgestellt, dass die Hinterräder HR, HL dieselbe Fahrspur benutzen wie die Vorderräder VR, VL. In diesem Fall ist die der Hinterachse 14 zugeordnete, fett markierte Ermittlungs-Kennlinie KL_HR bzw. KL_HL ausgehend von der Basis-Kennlinie KL_VR bzw. KL_VL in Richtung eines kompakteren Fahrgrunds 18 zu korrigieren.

In beiden vorgenannten Fällen gemäß Fig. 3 und Fig. 4 ist jeweils der der Hinterachse 14 zugeordnete Antriebsschlupf s_HR und s_HL bereits bekannt, wie oben beschrieben. Somit kann jeweils anhand der Ermittlungs-Kennlinie KL_HR und KL_HL der gesuchte Wert des Traktionskoeffizienten $\kappa$ bestimmt werden.

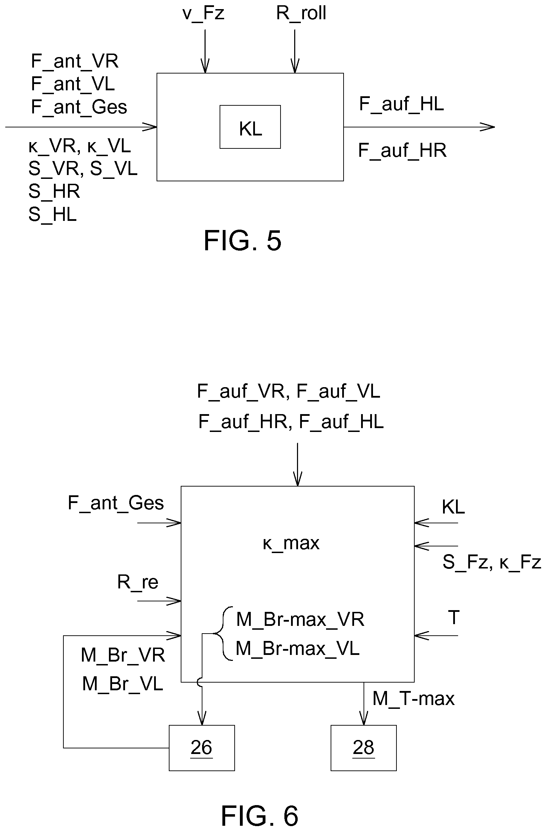

Zusammengefasst kann, wie anhand von Fig. 5 dargestellt, mit dem geschilderten Verfahren in Kenntnis

- der Gesamt-Antriebskraft F_ant_Ges,
- der Antriebskräfte F_ant_VR, F_ant_VL an einer ersten Radachse,
- des Antriebsschlupfs s_VR, s_VL an der ersten Radachse,
- des Antriebsschlupfs s_HR, s_HL an einer weiteren Radachse,
- des Traktionskoeffizienten $\kappa$_VR bzw. $\kappa$_VL an der ersten Radachse,
- ggf. weiterer Größen wie Fahrgeschwindigkeit v_Fz, Abrollradien R_roll einzelner Räder VR, VL, HR, HL,
- bereitgestellter Kennlinien KL, welche für unterschiedliche Bodenbeschaffenheiten jeweils einen Traktionskoeffizienten in Abhängigkeit eines Antriebsschlupfs wiedergeben,

eine Aufstandskraft F_auf_HR bzw. F_auf_HL an der weiteren Radachse, insbesondere Hinterachse 14, ermittelt werden, ohne dass hierzu eine Kraft-Sensorik oder dergleichen an dieser weiteren Radachse erforderlich ist.

Gemäß Fig. 6 werden Aufstandskräfte F_auf_VR, F_auf_VL an der Vorderachse 12 und F_auf_HR, F_auf_HL an der Hinterachse 14 des Nutzfahrzeugs 10 ermittelt, um in Abhängigkeit dieser ermittelten Aufstandskräfte F_auf_VR, F_auf_VL, F_auf_HR, F_auf_HL eine Bremseinrichtung 26 und/oder eine Allradkupplung 28 des Nutzfahrzeugs 10 anzusteuern. Hierbei ist es nicht zwangsläufig notwendig, einzelne Aufstandskräfte F_auf_VR, F_auf_VL, F_auf_HR, F_auf_HL nach dem anhand von Fig. 1 bis Fig. 5 erläuterten Verfahren zu ermitteln. Vielmehr können einzelne Aufstandskräfte F_auf_VR, F_auf_VL, F_auf_HR, F_auf_HL in einer bevorzugten, nicht erfindungsgemäßen Ausführungsform auf eine beliebige Weise ermittelt werden, um eine Ansteuerung gemäß Fig. 6 zu realisieren.

Der Ansteuerung gemäß Fig. 6 liegt die Überlegung zugrunde, dass bei dem Nutzfahrzeug 10, insbesondere einem Traktor, bei einem Bremsvorgang der Allradantrieb aktiviert wird. Hierbei wird der Allradantrieb vorzugsweise über eine Allradkupplung vollständig hinzugeschaltet. Infolge der Aktivierung des Allradantriebs kann die Bremskraft an den Hinterrädern HR, HL über den Antriebsstrang des Nutzfahrzeugs 10 auch auf die Vorderräder VR, VL wirken. Dies führt zu einer verstärkten Abbremsung der Vorderräder VR, VL. Um ein etwaiges Blockieren der Vorderräder zu vermeiden, kann ein maximales Bremsmoment je Vorderrad VR, VL definiert werden:

$$\text{M\_Br-max\_VR} = \kappa\_\text{max} \cdot \text{F\_auf\_VR} \cdot \text{R\_re} \qquad (3)$$

für das rechte Vorderrad VR und

$$\text{M\_Br-max\_VL} = \kappa\_\text{max} \cdot \text{F\_auf\_VL} \cdot \text{R\_re} \qquad (4)$$

für das linke Vorderrad VL.

Die Reifenradien R_re der Vorderräder VR, VL werden als bekannt vorausgesetzt, ebenso die Aufstandskräfte F_auf_VR, F_auf_VL, wie oben erläutert. Der maximale Traktionskoeffizient $\kappa$_max kann als Maximalwert einer zu bestimmenden Kennlinie KL aus dem bereitgestellten Kennlinienfeld gemäß Fig. 2 entnommen werden. Die zutreffende Kennlinie KL wird bestimmt, indem ein Traktionskoeffizient $\kappa$_Fz des Nutzfahrzeugs 10 und ein Antriebsschlupf s_Fz des Nutzfahrzeugs 10 ermittelt werden.

Für den Traktionskoeffizient $\kappa$_Fz gilt:

$$\kappa\_\text{Fz} =$$

$$\text{F\_ant\_Ges} / (\text{F\_auf\_VR} + \text{F\_auf\_VL} + \text{F\_auf\_HR} + \text{F\_auf\_HL})$$

$$(5).$$

Für den Antriebsschlupf s_Fz gilt:

$$s\_Fz \;=\; (v\_Fz \;-\; v\_Rad) \;/\; v\_Rad \qquad\qquad (6),$$

wobei im Folgenden für die Radgeschwindigkeit v_Rad = v_HR bzw. v_Rad = v_HL gilt.

Aus dem maximalen Traktionskoeffizienten $\kappa$_max lässt sich in der zutreffenden Kennlinie KL auch ein dazugehöriger maximaler Antriebsschlupf entnehmen, welcher von einer ABS (Antiblockiersystem)-Einrichtung an der Vorderachse 12 erreicht werden sollte, um eine maximale Abbremsung gemäß dem maximalen Bremsmoment M_Br-max_VR, M_Br-max_VL zu erzielen.

Hierdurch kann die hauptsächlich in den Bremsvorgang involvierte Vorderachse 12 des Nutzfahrzeugs 10 in ihrem optimalen Traktionsbereich bzw. Kraftschlussbereich betrieben werden, so dass ein etwaiges Blockieren der Vorderachse vermieden wird. Hierbei ist ein Drehmoment der Allradkupplung 28 derart einzustellen, dass ihre Drehmomenten-Kapazität das maximale Übertragungs-Drehmoment nicht übersteigt. Da auf die Bremseinrichtung 26 kein Einfluss genommen werden soll, sind die durch die Betriebsbremsen aufgebrachten Bremsmomente M_Br_VR (am Vorderrad VR) und M_Br_VL (am Vorderrad VL) von der Stellung des Bremspedals bzw. dem Bremsdruck abhängig und werden als bekannt vorausgesetzt. Damit ergibt sich ein maximal zulässiges Übertragungs-Drehmoment M_T-max, welches über die Allradkupplung 28 von den Bremsen der Hinterachse 14 auf die Vorderachse 12 übertragen werden soll als:

$$M\_T\text{-}max \;=\; (M\_Br\text{-}max\_V \;-\; M\_Br\_V) \;/\; T \qquad\qquad (7),$$

wobei

M_Br-max_V die Summe der maximalen Bremsmomente M_Br-max_VR und M_Br-max_VL ist,
M_Br_V die Summe der Bremsmomente M_Br_VR und M_Br_VL ist, und T die Übersetzung der Allradkupplung 28 bezüglich des Endabtriebs bezüglich der Vorderachse 12.

Im Falle eines aktiven Differentials in der Vorderachse 12 ist die Gleichung (7) zu modifizieren wie folgt:

$$M\_T\text{-}max \;=\; 2 \cdot M\_Br\_min \;/\; T \qquad\qquad (8),$$

wobei M_Br_min der kleinere Wert ist aus dem Vergleich der beiden Werte (M_Br-max_VR - M_Br_VR) und (M_Br-max_VL - M_Br_VL).

**Patentansprüche**

1. Verfahren zur Ermittlung einer Aufstandskraft (F_auf_HR, F_auf_HL) an einem Nutzfahrzeug (10), welches eine erste Radachse (12) und eine weitere Radachse (14) aufweist, wobei die Aufstandskraft (F_auf_HR, F_auf_HL) an der weiteren Radachse (14) in Abhängigkeit von folgenden Merkmalen ermittelt wird:

   - einem der weiteren Radachse (14) zugeordneten Antriebsschlupf (s_HR, s_HL), und
   - einer fahrgrundspezifischen Ermittlungs-Information (KL_HR, KL_HL), welche einen Traktionskoeffizienten ($\kappa$) in Abhängigkeit eines Antriebsschlupfs (s) wiedergibt, **dadurch gekennzeichnet, dass** die fahrgrundspezifische Ermittlungs-Information (KL_HR, KL_HL) von einer fahrgrundspezifischen Basis-Information (KL_VR, KL_VL) abgeleitet wird, welche der ersten Radachse (12) des Nutzfahrzeugs (10) zugeordnet ist.

2. Verfahren nach Anspruch 1, **dadurch gekennzeichnet, dass** die fahrgrundspezifische Ermittlungs-Information (KL_HR, KL_HL) von der Basis-Information (KL_VR, KL_VL) in Abhängigkeit mindestens einer der folgenden Größen abgeleitet wird:

   - einer Fahrgeschwindigkeit (v_Fz) des Nutzfahrzeugs (10),
   - einem Lenkzustand des Nutzfahrzeugs (10),
   - einer Fahrspur (20) der ersten Radachse (12),

- einer Fahrspur (22) der weiteren Radachse (14),
- einem Abrollradius (R_roll) mindestens eines Rades (VR, VL) der ersten Radachse (12),
- einem Abrollradius (R_roll) mindestens eines Rades (HR, HL) der weiteren Radachse (14).

3. Verfahren nach Anspruch 1 oder 2, **dadurch gekennzeichnet, dass** die Basis-Information (KL_VR, KL_VL) einen Traktionskoeffizienten ($\kappa$) in Abhängigkeit eines Antriebsschlupfs (s) wiedergibt.

4. Verfahren nach einem der Ansprüche 1 bis 3, **dadurch gekennzeichnet, dass**

- mehrere unterschiedliche fahrgrundspezifische Informationen (KL) bereitgestellt werden, welche jeweils einen Traktionskoeffizienten ($\kappa$) in Abhängigkeit eines Antriebsschlupfs (s) wiedergeben,
- an der ersten Radachse (12) ein Wert eines Traktionskoeffizienten ($\kappa$) und ein Wert eines Antriebsschlupfs (s) ermittelt werden, und
- aus den bereitgestellten unterschiedlichen fahrgrundspezifischen Informationen (KL) die fahrgrundspezifische Basis-Information (KL_VR, KL_VL) in Abhängigkeit der ermittelten Werte des Traktionskoeffizienten ($\kappa$) und des Antriebsschlupfs (s) bestimmt wird.

5. Verfahren nach einem der vorhergehenden Ansprüche, **dadurch gekennzeichnet, dass** eine fahrgrundspezifische Ermittlungs-Information und/oder eine fahrgrundspezifische Basis-Information jeweils durch eine Kennlinie (KL_HR, KL_HL, KL_VR, KL_VL) repräsentiert wird.

6. Verfahren nach einem der vorhergehenden Ansprüche, **dadurch gekennzeichnet, dass** die erste Radachse als eine Vorderachse (12) des Nutzfahrzeugs (10) und die weitere Radachse als eine Hinterachse (14) des Nutzfahrzeugs (10) ausgebildet ist.

7. Verfahren nach einem der vorhergehenden Ansprüche, **dadurch gekennzeichnet, dass** in Abhängigkeit einer ermittelten Aufstandskraft (F_auf_VR, F_auf_VL, F_auf_HR, F_auf_HL)

- eine Bremseinrichtung (26) des Nutzfahrzeugs (10) angesteuert wird, und/oder
- eine Allradkupplung (28) des Nutzfahrzeugs (10) angesteuert wird.


**Claims**

1. Method for determining a contact force (F_auf_HR, F_auf_HL) on a utility vehicle (10) which has a first wheel axle (12) and a further wheel axle (14), wherein the contact force (F_auf_HR, F_auf_HL) at the further wheel axle (14) is determined as a function of the following features:

- a drive slip (s_HR, s_HL) assigned to the further wheel axle (14), and
- underlying-surface-specific determining information (KL_HR, KL_HL) which represents a traction coefficient (k) as a function of a drive slip (s), **characterized in that** the underlying-surface-specific determining information (KL_HR, KL_HL) is derived from underlying-surface-specific basic information (KL_VR, KL_VL) which is assigned to the first wheel axle (12) of the utility vehicle (10).

2. Method according to Claim 1, **characterized in that** the underlying-surface-specific determining information (KL_HR, KL_HL) is derived from the basic information (KL_VR, KL_VL) as a function of at least one of the following variables:

- the velocity (v_Fz) of the utility vehicle (10),
- a steering state of the utility vehicle (10),
- a lane (20) of the first wheel axle (12),
- a lane (22) of the further wheel axle (14),
- a rolling radius (R_roll) of at least one wheel (VR, VL) of the first wheel axle (12),
- a rolling radius (R_roll) of at least one wheel (HR, HL) of the further wheel axle (14).

3. Method according to Claim 1 or 2, **characterized in that** the basic information (KL_VR, KL_VL) represents a traction coefficient (k) as a function of a drive slip (s).

**4.** Method according to one of Claims 1 to 3, **characterized in that**

- a plurality of different underlying-surface-specific information items (KL) which each represent a traction coefficient (k) as a function of a drive slip (s) are made available,
- a value of a traction coefficient (k) and a value of a drive slip (s) are determined at the first wheel axle (12), and
- the underlying-surface-specific basic information (KL_VR, KL_VL) is determined from the supplied different underlying-surface-specific information (KL) as a function of the determined values of the traction coefficient (k) and of the drive slip (s).

**5.** Method according to one of the preceding claims, **characterized in that** underlying-surface-specific determining information and/or underlying-surface-specific basic information is respectively represented by a characteristic curve (KL_HR, KL_HL, KL_VR, KL_VL).

**6.** Method according to one of the preceding claims, **characterized in that** the first wheel axle is embodied as a front axle (12) of the utility vehicle (10), and the further wheel axle is embodied as a rear axle (14) of the utility vehicle (10).

**7.** Method according to one of the preceding claims, **characterized in that**

- a brake device (26) of the utility vehicle (10) is actuated and/or
- an all-wheel clutch (28) of the utility vehicle (10) is actuated,

as a function of a determined contact force (F_auf_VR, F_auf_VL, F_auf_HR, F_auf_HL).

**Revendications**

**1.** Procédé de détermination d'une force de contact au sol (F_auf_HR, F__auf_HL) sur un véhicule utilitaire (10) qui comporte un premier essieu (12) et un autre essieu (14), la force de contact au sol (F_auf_HR, F_auf_HL) sur l'autre essieu (14) étant déterminée en fonction des éléments caractéristiques suivants :

- un glissement d'entraînement (s_HR, s_HL) associé à l'autre essieu (14), et
- une information de détermination (KL_HR, KL_HL) spécifique au sol de roulement qui représente un coefficient de traction (k) en fonction d'un glissement d'entraînement (s), **caractérisé en ce que** l'information de détermination (KL_HR, KL_HL) spécifique au sol de roulement est dérivée d'une information de base (KL_VR, KL_VL) spécifique au sol de roulement qui est associée au premier essieu (12) du véhicule utilitaire (10).

**2.** Procédé selon la revendication 1, **caractérisé en ce que** l'information de détermination (KL_HR, KL_HL) spécifique au sol de roulement est dérivée de l'information de base (KL_VR, KL_VL) en fonction d'au moins une des grandeurs suivantes :

- une vitesse de conduite (v_Fz) du véhicule utilitaire (10),
- un état de direction du véhicule utilitaire (10),
- une voie de roulement (20) du premier essieu (12),
- une voie de roulement (22) de l'autre essieu (14),
- un rayon de roulement (R_roll) d'au moins une roue (VR, VL,) du premier essieu (12),
- un rayon de roulement (R_roll) d'au moins une roue (HR, HL) de l'autre essieu (14).

**3.** Procédé selon la revendication 1 ou 2, **caractérisé en ce que** l'information de base (KL_VR, KL_VL) reproduit un coefficient de traction (k) en fonction d'un glissement d'entraînement (s).

**4.** Procédé selon l'une des revendications 1 à 3, **caractérisé en ce que**

- une pluralité d'informations différentes (KL), spécifiques au sol de roulement, sont fournies qui reproduisent chacune un coefficient de traction (k) en fonction d'un glissement d'entraînement (s),
- une valeur d'un coefficient de traction (k) et une valeur d'un glissement d'entraînement (s) sont déterminées sur le premier essieu (12), et
- les informations de base (KL_VR, KL_VL), spécifiques au sol de roulement, sont déterminées en fonction des valeurs déterminées du coefficient de traction (k) et du glissement d'entraînement (s) à partir des différentes informations (KL) fournies spécifiques au sol de roulement.

5. Procédé selon l'une des revendications précédentes, **caractérisé en ce que** l'information de détermination spécifique au sol de roulement et/ou l'information de base spécifique au sol de roulement sont représentées chacune par une courbe caractéristique (KL_HR, KL_HL, KL_VR, KL_VL).

6. Procédé selon l'une des revendications précédentes,
**caractérisé en ce que** le premier essieu est conçu comme un essieu avant (12) du véhicule utilitaire (10) et l'autre essieu est conçu comme un essieu arrière (14) du véhicule utilitaire (10).

7. Procédé selon l'une des revendications précédentes,
**caractérisé en ce que**

- un dispositif de freinage (26) du véhicule utilitaire (10) est commandé, et/ou
- un embrayage à traction intégrale (28) du véhicule utilitaire (10) est activé

en fonction d'une force de contact au sol déterminée (F_auf_VR, F_auf_VL, F_auf_HR, F_auf_HL).

F_ant_Ges

V_Fz

FIG. 1

16

10

HR
F_auf_HR
F_ant_HR
κ_HR, S_HR

18   12

14

20

22

20

VL
F_auf_VL
F_ant_VL
κ_VL, S_VL

VR
F_auf_VR
F_ant_VR
κ_VR, S_VR

22

HL
F_auf_HL
F_ant_HL
κ_HL, S_HL

KL

KL

1.0

0.8

κ

0.6

0.4

0.2

0

0    20%   40%   60%   80%

KL

Beton, Asphalt (trocken)

KL

trockener Lehm, Stoppel

lehmiger Sand, Stoppel

KL

lehmiger Sand, feucht

toniger Lehm, nass

KL

Schlamm

KL

Brei

S

FIG. 2

FIG. 3

FIG. 4

v_Fz          R_roll

F_ant_VR
F_ant_VL
F_ant_Ges                    KL                F_auf_HL

κ_VR, κ_VL                                     F_auf_HR
S_VR, S_VL
S_HR
S_HL

**FIG. 5**

F_auf_VR, F_auf_VL
F_auf_HR, F_auf_HL

F_ant_Ges                                              KL

                        κ_max                    S_Fz, κ_Fz

R_re

                        ⎰ M_Br-max_VR            T
M_Br_VR                 ⎱ M_Br-max_VL
M_Br_VL

                                            M_T-max

                    26                  28

**FIG. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015212897 A1